# EUROPÄISCHE PATENTANMELDUNG

(11) **EP 2 060 999 A1**
(43) Veröffentlichungstag der Anmeldung: **20.05.2009**
(21) Anmeldenummer: 07150440.1
(22) Anmeldetag: 27.12.2007
(51) Int. Cl.: G06Q 10/00

(54) **System, Verfahren, Vorrichtung und Computerprogrammprodukt zur Bewirtschaftung von Dienstterminals**

(30) Priorität: 12.11.2007 EP 07120462
(71) Anmelder: Swisscom (Schweiz) AG, 3050 Bern (CH); Microtronic AG, 4702 Oensingen (CH)
(72) Erfinder: Wahli, Bernard, 6300, Zug (CH); Kummernuss, Thomas, 3145, Niederscherli (CH)
(74) Vertreter: BOVARD AG

(57) **Zusammenfassung**

Die vorliegende Erfindung bezieht sich auf ein System zur Bewirtschaftung von Dienstterminals (201,202,203,204). Eine Zentrale (3) mit einem Dienstterminal-Erfassungsmodul (32) und einem Serviceeinheiten-Erfassungsmodul (34) ist eingerichtet, um Daten von Dienstterminals (201,202,203,204) und Daten von Serviceeinheiten (401,402,403) zu erfassen. Die Übertragung kann durch mindestens ein Dienstterminal-Übertragungsmodul (21) und durch mindestens ein Serviceeinheiten-Übertragungsmodul (41) erfolgen. Einin Bewirtschaftungsmodul (33) der Zentrale (3) ist eingerichtet, um basierend auf Daten von Dienstterminals (201,202,203,204) und Daten von Serviceeinheiten (401,402,403) einen Bewirtschaftungsauftrag zur Bewirtschaftung eines Dienstterminals (201,202,203,204) zu erstellen und an eine Serviceeinheit (401,402,403) zu übermitteln.

## Beschreibung

### Technisches Gebiet

Die vorliegende Erfindung bezieht sich auf ein System, Verfahren, Vorrichtungen und Computerprogrammprodukt zur Bewirtschaftung von Dienstterminals.

### Stand der Technik

Im Stand der Technik sind Dienstterminals in verschiedenen Ausführungen bekannt. So befinden sich beispielsweise an vielen Bahnhöfen Verkaufsautomaten, um Benutzern Produkte oder Dienstleistungen wie Snacks, Getränke oder Fahrkarten anzubieten. Ein solches Dienstterminal hat beschränkte Kapazitäten, um Produkte für den Verkauf oder um Betriebsmittel aufzunehmen. So können in einem Verkaufs- oder Warenautomat beispielsweise 40 Produkte von unterschiedlicher Grösse, also z.B. Produkte wie Backwaren, Süsswaren, Snacks, Frischwaren, Dosen oder PET-Flaschen, angeordnet sein, wobei für jedes der 40 Produkte beispielsweise 20 Exemplare, also beispielsweise 20 Exemplare eines bestimmten Schokoladenstengels, angeordnet sein können. Das Dienstterminal, respektive der Verkaufs- oder Warenautomat, ist eingerichtet, um beispielsweise mit Kleingeld oder mit einem bargeldlosen Zahlungssystem einen Geldbetrag entgegenzunehmen und ein oder mehrere Exemplare eines durch den Benutzer des Dienstterminals gewählten Produkts auszugeben. Dienstterminals sind im Stand der Technik weit verbreitet, weil mit einem geringen Personalaufwand Produkte oder Dienstleistungen für den Verkauf angeboten werden können. Solche Dienstterminals haben zudem den Vorteil, dass Produkte oder Dienstleistungen rund um die Uhr angeboten werden können. Neben dem schon erwähnten Verkaufs- oder Warenautomaten können Dienstterminals beispielsweise Zeitungsautomaten, Benzinzapfsäulen, Fotoautomaten, Briefmarkenautomaten, Zugangsautomaten bei Toiletteneinrichtungen, Automaten für die Abgabe von Videos oder Computerspiele, öffentliche Telefonsprechzellen, Spielautomaten in Spielhallen, etc. umfassen.

Dienstterminals müssen zu bestimmten Zeitpunkten gewartet werden, beispielsweise sobald Produkte oder Betriebsmittel aufgebraucht sind. Eine Wartung eines Dienstterminals kann das Nachfüllen von Produkten umfassen, also z.B. das Nachfüllen von Backwaren, Süsswaren, Getränken, etc. bei einem Warenautomaten oder das Nachfüllen von Betriebsmitteln, wie z.B. das Nachfüllen von Papierrollen oder von Farbstoffen bei einem Fahrkartenautomaten. Bei einer grösseren Anzahl von Dienstterminals muss die Betreiberfirma der Dienstterminals deshalb einen hohen Aufwand treiben, um die Dienstterminals zu bewirtschaften. Die Bewirtschaftung von Dienstterminals erfolgt im Stand der Technik aufgrund von Erfahrungswerten, sodass beispielsweise in regelmässigen Abständen mit einer Serviceeinheit eine bestimmte Route abgefahren wird und dabei die entlang dieser Route aufgestellten Dienstterminals gewartet respektive bewirtschaftet werden. Eine solche Bewirtschaftung von Dienstterminals hat den Nachteil, dass der Betreiber eines Dienstterminals sehr schlecht auf unvorhergesehene Ereignisse, wie z.B. dem vorzeitigen Ausverkauf eines Produkts oder dem vorzeitigen Aufbrauchen eines Betriebsmittels, reagieren kann.

### Darstellung der Erfindung

Es ist eine Aufgabe der vorliegenden Erfindung, ein neues System, Verfahren, Vorrichtungen und Computerprogrammprodukt zur Bewirtschaftung von Dienstterminals vorzuschlagen, welche nicht die Nachteile des Standes der Technik aufweisen. Das neue System, Verfahren, Vorrichtungen und Computerprogrammprodukt zum Bewirtschaften von Dienstterminals sollen insbesondere bewirken, dass Dienstterminals effizienter und bedarfsgerechter bewirtschaftet werden können.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass eine Zentrale mit einem Dienstterminal-Erfassungsmodul zur Erfassung von Daten von Dienstterminals und einem Serviceeinheiten-Erfassungsmodul zur Erfassung von Daten von Serviceeinheiten eingerichtet ist, dass mindestens ein Dienstterminal-Übertragungsmodul zur Übertragung von Daten eines Dienstterminals an das Dienstterminal-Erfassungsmodul eingerichtet ist, dass mindestens ein Serviceeinheiten-Übertragungsmodul zur Übertragung von Daten einer Serviceeinheit an das Serviceeinheiten-Erfassungsmodul eingerichtet ist, und dass ein Bewirtschaftungsmodul der Zentrale eingerichtet ist, um basierend auf Daten von Dienstterminals und Daten von Serviceeinheiten einen Bewirtschaftungsauftrag zur Bewirtschaftung eines Dienstterminals zu erstellen und an eine Serviceeinheit zu übermitteln. Ein solches System hat insbesondere den Vorteil, dass die Bewirtschaftung von Dienstterminals effizient und zeitgerecht durchgeführt werden kann.

In einer Ausführungsvariante ist ein Servicelager-Erfassungsmodul der Zentrale zur Erfassung von Daten von Servicelagern eingerichtet und mindestens ein Servicelager-Übertragungsmodul ist zur Übertragung von Daten eines Servicelagers eingerichtet. Es sind Mittel vorgesehen, um den Bewirtschaftungsauftrag zur Bewirtschaftung eines Dienstterminals basierend auf Daten von Servicelagern zu erstellen. Ein solches System hat insbesondere den Vorteil, dass Serviceeinheiten zur Bewirtschaftung von Dienstterminals effizient und zeitgerecht mit Produkten oder Betriebsmitteln, welche in einem Servicelager gelagert sind, nachgerüstet werden können.

In einer weiteren Ausführungsvariante ist ein Kommunikationsnetz eingerichtet, um Daten zwischen Dienstterminals, Serviceeinheiten und/oder der Zentrale respektive Servicelagern zu übertragen. Ein solches System hat insbesondere den Vorteil, dass bestehende Kommunikationsinfrastrukturen leicht zusammen mit dem erfindungsgemässen System verwendet werden können.

In einer anderen Ausführungsvariante ist ein mobiles Kommunikationsgerät eingerichtet, um mittels einer Nahbereichs-Schnittstelle Daten eines Dienstterminals zu erfassen und mittels einer Mobilfunk-Schnittstelle die erfassten Daten an das Dienstterminal-Erfassungsmodul der Zentrale zu übermitteln. Ein solches System hat insbesondere den Vorteil, dass auch bei einem Dienstterminal ohne Verbindungsmöglichkeit zu einem Kommunikationsnetz Daten zwischen dem Dienstterminal und der Zentrale einfach übertragen werden können.

In einer weiteren Ausführungsvariante umfasst das System Bezugsmittel für den Bezug von Produkten, welche mittels des Dienstterminals angeboten sind, und zur Abbuchung eines entsprechenden Geldbetrags von einem Konto, wobei die Bezugsmittel eingerichtet sind, um die Abbuchung zusammen mit einer Übertragung von Daten des Dienstterminals an das Dienstterminal-Erfassungsmodul der Zentrale durchzuführen. Ein solches System hat insbesondere den Vorteil, dass bestehende Mittel zur Durchführung einer Abbuchung einfach ergänzt werden kann, um Daten zwischen dem Dienstterminal und der Zentrale zu übertragen.

In einer anderen Ausführungsvariante sind mindestens in der Zentrale angebrachte Speichermittel eingerichtet, um Bezugsdaten betreffend einem verfügbaren Bestand und/oder einer Bezugsfrequenz von Produkten, welche mittels dem Dienstterminal angeboten sind, abzuspeichern, wobei Mittel vorgesehen sind, um den Bewirtschaftungsauftrag basierend auf den Bezugsdaten zu erstellen. Ein solches System hat insbesondere den Vorteil, dass die Bewirtschaftung von Dienstterminals besonders effizient an einen aktuellen Bedarf angepasst werden kann, indem bei einem geringen Bestand oder bei einer hohen Bezugsfrequenz termingerecht ein entsprechender Bewirtschaftungsauftrag erstellt werden kann.

In einer weiteren Ausführungsvariante sind in der Zentrale Speichermittel angebracht, welche eingerichtet sind, um Verfügbarkeitsdaten betreffend einem Bestand von Produkten, welche in der Serviceeinheit mitgeführt sind, abzuspeichern, wobei Mittel vorgesehen sind, um den Bewirtschaftungsauftrag basierend auf den Verfügbarkeitsdaten zu erstellen. Ein solches System hat insbesondere den Vorteil, dass der Bewirtschaftungsauftrag optimal an die Möglichkeiten einer Serviceeinheit angepasst ist.

In einer anderen Ausführungsvariante sind mindestens in der Zentrale Speichermittel angebracht, welche eingerichtet sind, um Standortdaten betreffend dem Standort eines Dienstterminals und/oder dem Standort einer Serviceeinheit respektive dem Standort eines Servicelagers abzuspeichern, wobei Mittel vorgesehen sind, um den Bewirtschaftungsauftrag basierend auf den abgespeicherten Standortdaten zu erstellen. Ein solches System hat insbesonder den Vorteil, dass die Bewirtschaftung von Dienstterminals besonders effizient und ökologisch durchgeführt werden kann, indem unnötige Umwege von Serviceeinheiten vermieden werden können.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figur illustriert:

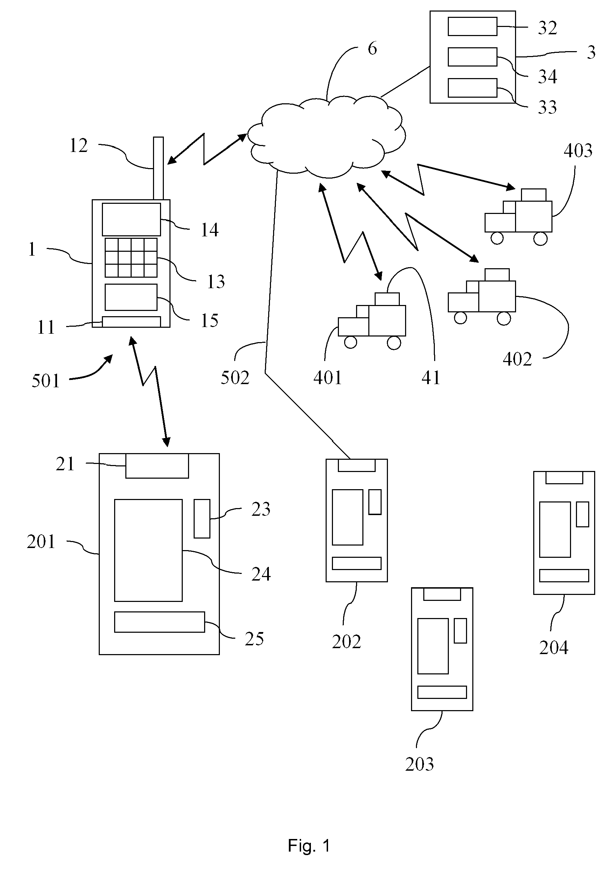

Figur 1 zeigt ein erfindungsgemässes System zur Bewirtschaftung von Dienstterminals.

### Wege zur Ausführung der Erfindung

In Figur 1 bezieht sich das Bezugszeichen 201 auf ein Dienstterminal. Das Dienstterminal 201 ist insbesondere eingerichtet, um Produkte und/oder Dienstleistungen gegen Bezahlung eines Geldbetrags einem Benutzer des Dienstterminals zur Verfügung zu stellen. So kann sich das Dienstterminal 201 beispielsweise auf einen Verkaufs- oder Warenautomaten zur Abgabe von Snacks oder Getränken oder beispielsweise auf einen Fahrkartenautomaten beziehen. Das Dienstterminal 201 kann sich allerdings auch auf einen Zeitungsautomaten, eine Benzinzapfsäule, einen Fotoautomaten, einen Briefmarkenautomaten, einen Zugangsautomaten bei Toiletteneinrichtungen, einen Automaten für die Abgabe von Videos oder Computerspiele, eine öffentliche Telefonsprechzelle, einen Spielautomaten in einer Spielhalle, etc. beziehen.

Wie in Figur 1 skizziert, kann das Dienstterminal 201 beispielsweise ein Angebotsmodul 24 für die Lagerung und Präsentation von Produkten und/oder Dienstleistungen umfassen. Das Angebotsmodul 24 kann beispielsweise bei einem Automaten für die Abgabe von Videos eine Vorrichtung zur Lagerung und Präsentation von DVD Disks (DVD: Digital Versatile Disk) und/oder von Videokassetten umfassen. Bei einem Fahrkartenautomaten kann das Angebotsmodul einen Bildschirm zur menugeführten Selektion einer Fahrkarte umfassen. Das Angebotsmodul 24 kann ferner irgendwelche andere Einrichtungen für das Anbieten von Produkten und/oder Dienstleistungen umfassen.

In Figur 1 bezieht sich das Bezugszeichen 25 auf ein Ausgabemodul. Das Ausgabemodul 25 kann bei einem Getränkeautomaten Mittel für die Halterung eines Bechers oder für die Ausgabe einer Getränkeflasche umfassen. Das Ausgabemodul 25 kann bei einem Automaten für die Abgabe von Videos beispielsweise Mittel umfassen, um die vom Benutzer selektierten DVD Disks oder Videokassetten für einen einfachen Zugriff durch den Benutzer kurzzeitig zu lagern. Das Ausgabemodul 25 kann ferner irgendwelche andere Einrichtungen für die Ausgabe oder das Freischalten von Produkten und/oder Dienstleistungen umfassen.

In Figur 1 bezieht sich das Bezugszeichen 23 auf ein Selektions- und Bezahlmodul. Das Selektions- und Bezahlmodul 23 kann eine Tastatur umfassen, um Produkte und/oder Dienstleistungen des Dienstterminals auszuwählen. So kann beispielsweise ein Verkaufsautomat für Snacks und Getränke verschiedene Produkte wie beispielsweise Schokoladenriegel, Kaugummis, Chips, Kuchenstücke oder Fruchtsäfte umfassen, welche im Angebotsmodul 24 angeordnet sind. Jedes dieser im Angebotsmodul 24 angeordneten Produkte kann beispielsweise mit einer dreistelligen Nummer gekennzeichnet sein. Dementsprechend kann das Selektions- und Bezahlmodul 23 eine Tastatur umfassen, um eine dreistellige Nummer einzugeben. Das Selektions- und Bezahlmodul 23 kann dementsprechend eine Anzeige umfassen, um eine dreistellige Nummer anzuzeigen und um einen Geldbetrag anzuzeigen, welcher zur Bezahlung des der dreistelligen Nummer entsprechenden Produkts notwendig ist. Das Selektions- und Bezahlmodul 23 kann weiter Mittel umfassen, um Münzen oder Geldscheine entgegenzunehmen und um die entgegengenommen Münzen oder Geldscheine auf ihren Geldwert zu überprüfen. Selbstverständlich kann das Selektions- und Bezahlmodul 23 eingerichtet sein, um elektronische Zahlungsmittel oder irgendwelche anderen Zahlungsmittel entgegenzunehmen. Das Selektions- und Bezahlmodul 23 kann eingerichtet sein, um zu Überprüfen, dass ein der dreistelligen Nummer eines Produkts entsprechender Geldbetrag erfolgreich entgegengenommen oder verbucht worden ist und aufgrund dessen die Ausgabe des der dreistelligen Nummer entsprechenden Produkts auszulösen, sodass der Benutzer des Dienstterminals 201 das der dreistelligen Nummer entsprechende Produkt aus dem Ausgabemodul 25 entnehmen kann.

In Figur 1 bezieht sich das Bezugszeichen 3 auf eine Zentrale. Die Zentrale 3 kann beispielsweise einen Computer sowie auf diesem Computer ablauffähige Softwaremodule umfassen. Die Zentrale 3 sowie die auf dem Computer ablauffähigen Softwaremodule können eingerichtet sein, um die nachfolgend beschriebenen Funktionen durchzuführen. Selbstverständlich können die Funktionen der auf dem Computer ablauffähigen Softwaremodule durch entsprechende hardwaremässig implementierte elektronische Schaltungen implementiert sein.

In Figur 1 bezieht sich das Bezugszeichen 6 auf ein Telekommunikationsnetzwerk. Das Telekommunikationsnetzwerk 6 kann beispielsweise ein Mobilfunknetzwerk, ein Festnetzwerk oder irgendein anderes Telekommunikationsnetzwerk umfassen. So kann das Telekommunikationsnetzwerk 6 ganz oder teilweise aus einem GSM Mobilfunknetz (GSM: Global System for Mobile Communications), aus einem UMTS Mobilfunknetz (UMTS: Universal Mobile Telecommunications System), aus einem satellitenbasierten Mobilfunknetz oder aus irgendeinem anderen Mobilfunknetz aufgebaut sein. Das Telekommunikationsnetz 6 kann ganz oder teilweise ein Festnetzwerk, ein IP basiertes Netzwerk (IP: Internet Protocol), ein WLAN Netzwerk (WLAN:
Wireless Local Area Network) oder irgendein anderes
Telekommunikationsnetzwerk umfassen.

In Figur 1 beziehen sich die Bezugszeichen 202,203,204 auf weitere Dienstterminals, welche in ähnlicher oder in gleicher Weise wie das Dienstterminal 201 aufgebaut sein können. Die Dienstterminals 201,202,203,204 können beispielsweise das Eigentum eines oder mehrerer Anbieter respektive Betreiber von Dienstterminals sein. Die Dienstterminals 201,202,203,204 können an verschiedenen Standorten wie beispielsweise in Bahnhöfen, Flughäfen, Schulen, Verwaltungsgebäuden oder Industriegebäuden angeordnet sein. Mittels der Dienstterminals 201,202,203,204 kann ein Anbieter oder Betreiber von Dienstterminals an unterschiedlichen Standorten verschiedenen Benutzern Produkte und/oder Dienstleistungen anbieten.

In Figur 1 bezieht sich das Bezugszeichen 21 auf eine Kommunikationsschnittstelle. Die Kommunikationsschnittstelle 21 kann in irgendeiner im Stand der Technik bekannten Weise ausgeführt sein. So kann sich die Kommunikationsschnittstelle 21 auf eine NFC Schnittstelle (NFC: Near Field Communications), auf eine RFID Schnittstelle (RFID:
Radio Frequency Identification), auf eine Bluetooth Schnittstelle, auf eine IrDA Schnittstelle (IrDA: Infrared Data Association), auf eine Festnetzkommunikationsschnittstelle, auf eine Mobilfunknetzkommunikationsschnittstelle, auf eine Ethernet Schnittstelle, auf eine WLAN Schnittstelle oder auf irgendeine andere Kommunikationsschnittstelle beziehen. Wie in Figur 1 skizziert, kann mittels der Kommunikationsschnittstelle 21 in indirekter oder direkter Weise eine Kommunikationsverbindung zwischen dem Dienstterminal 201 und dem Telekommunikationsnetzwerk 6 erstellt werden. In Figur 1 bezieht sich das Bezugszeichen 501 auf eine indirekte Kommunikationsverbindung, wobei eine Kommunikationsverbindung zwischen dem Dienstterminal 201 und einem mobilen Endgerät 1 erstellt wird und eine Kommunikationsverbindung zwischen dem mobilen Endgerät 1 und dem Telekommunikationsnetzwerk 6 erstellt wird. In Figur 1 bezieht sich das Bezugszeichen 502 auf eine direkte Kommunikationsverbindung, wobei beispielsweise eine Kommunikationsverbindung direkt über ein Festnetz zwischen dem Dienstterminal 202 und dem Telekommunikationsnetzwerk 6 erstellt ist. Dementsprechend können von den Dienstterminals 201,202,203,204 mittels einer entsprechenden Kommunikationsschnittstelle - welche für das Dienstterminal 201 das Bezugszeichen 21 hat und welche für die Dienstterminals 202,203,204 in Figur 1 entsprechend skizziert ist - entsprechende Kommunikationsverbindungen zum Telekommunikationsnetzwerk 6 erstellt werden.

In Figur 1 beziehen sich die Bezugszeichen 401,402,403 auf Serviceeinheiten. Wie in Figur 1 skizziert, kann eine Serviceeinheit 401,402,403 insbesondere einen Lieferwagen oder ein Automobil umfassen. Allerdings kann eine Serviceeinheit 401,402,403 irgendein Transportmittel wie beispielsweise ein Fahrrad, ein Motorrad oder irgendein anderes Transportmittel umfassen. Die Serviceeinheit 401,402,403 kann beispielsweise auch ein robotergesteuertes Transportmittel umfassen. Die Serviceeinheit 401,402,403 ist eingerichtet, um bei den Dienstterminals 201,202,203,204 Bewirtschaftungsfunktionen durchzuführen. Solche Bewirtschaftungsfunktionen können insbesondere das Nachfüllen von Produkten oder Betriebsmittel der Dienstterminals 201,202,203,204 umfassen. Das Nachfüllen von Produkten kann sich beispielsweise auf das Auffüllen von im Dienstterminal 201,202,203,204 angeordneten Schokoladenriegel, Kaugummis, Chips, Kuchenstücke oder Fruchtsäfte beziehen. Das Nachfüllen von Betriebsmitteln kann sich beispielsweise auf das Nachfüllen von Papierrollen zum Drucken von Fahrkarten beziehen.

Eine Serviceeinheit 401,402,403 kann eine Kommunikationsschnittstelle umfassen, um eine Kommunikationsverbindung mit dem Telekommunikationsnetzwerk 6 zu erstellen. Eine solche Kommunikationsschnittstelle ist in Figur 1 für die Serviceeinheit 401 mit dem Bezugszeichen 41 versehen. Eine solche Kommunikationsschnittstelle kann beispielsweise an einem mobilen Kommunikationsgerät angebracht sein, wobei eine Kommunikationsverbindung zum Telekommunikationsnetzwerk 6 gemäss einem GSM oder einem UMTS Standard hergestellt werden kann. Die Kommunikationsschnittstelle oder das mobile Kommunikationsgerät können mit der Serviceeinheit 401,402,403 fest verbunden sein oder von der Serviceeinheit 401,402,403 entfernt werden. So kann beispielsweise die Serviceeinheit 401,402,403 ein Automobil und ein mobiles Kommunikationsgerät umfassen, wobei das Automobil beispielsweise in einer Garage angeordnet ist und wobei das mobile Kommunikationsgerät beispielsweise in einer Wohnung angeordnet ist.

Die Serviceeinheit 401,402,403 kann Mittel umfassen, um Produkte oder Betriebsmittel von Dienstterminals aufzunehmen. So können beispielsweise in einem Automobil Regale oder Container angeordnet sein, um Produkte oder Betriebsmittel wie beispielsweise Schokoladenriegel, Kaugummis, Chips, Kuchenstücke, Fruchtsäfte oder Papierrollen aufzunehmen. Die Serviceeinheit 401,402,403 kann Mittel umfassen, um den aktuellen Bestand von in der Serviceeinheit 401,402,403 angeordneten Produkten oder Betriebsmitteln zu bestimmen. Eine solche Bestimmung des Bestands kann beispielsweise auf einer Gewichtsmessung, auf einer Auswertung von optischen Messungen, wie einer Auswertung von Videoaufnahmen oder einer Auswertung von mit einem Laser abgetasteten Barcodes welche an Produkten oder Betriebsmitteln angebracht sind, oder auf der Auswertung von elektromagnetischen Messungen, wie der Erfassung von RFID-Tags welche an Produkten oder Betriebsmitteln angebracht sind, beruhen.

Die Dienstterminals 201,202,203,204 und die Serviceeinheiten 401,402,403 können Mittel zur Ermittlung des aktuellen Standorts umfassen. Der aktuelle Standort kann beispielsweise eine Adressbezeichnung bestehend aus einem Strassennamen, einer Hausnummer und einer Stadt umfassen. Der aktuelle Standort kann beispielsweise auch eine geografische Längen- und Breitenangabe umfassen. Der aktuelle Standort kann beispielsweise bei der Installation des Dienstterminals 201,202,203,204 in einem Speichermodul des Dienstterminals oder ein einem Speichermodul der Zentrale 3 abgespeichert sein. Der aktuelle Standort kann beispielsweise bei einer beweglichen Serviceeinheit 401,402,403 mittels einer GPS Messung (GPS: Global Positioning System) einer an der Serviceeinheit angebrachten GPS Vorrichtung bestimmt werden und in einem Speichermodul der Serviceeinheit 401,402,403 abgespeichert werden. Selbstverständlich kann die Bestimmung des aktuellen Standorts des Dienstterminals 201,202,203,204 oder der Serviceeinheit 401,402,403 auf irgendwelchen anderen Methoden, wie beispielsweise der Peilmessung in Bezug auf bekannte Standorte wie z.B. dem Standort einer Basisstation eines Mobilfunknetzwerks, beruhen.

In Figur 1 bezieht sich das Bezugszeichen 32 auf ein in der Zentrale 3 angeordnetes Dienstterminal-Erfassungsmodul. Das Dienstterminal-Erfassungsmodul 32 kann Speichermittel umfassen, um beispielsweise Identifikationsdaten von Dienstterminals 201,202,203,204 sowie Beschreibungsdaten der Dienstterminals 201,202,203,204 abzuspeichern. Die Beschreibungsdaten der Dienstterminals 201,202,203,204 können insbesondere den aktuellen Standort eines Dienstterminals und eine Liste mit den vom Dienstterminal angebotenen Produkten und/oder Dienstleistungen umfassen. Die Beschreibungsdaten können ferner Angaben über den Bestand (d.h. über die verfügbare Anzahl) oder Angaben über die Bezugsfrequenz von Produkten oder Betriebsmitteln des Dienstterminals umfassen.

In Figur 1 bezieht sich das Bezugszeichen 34 auf ein in der Zentrale 3 angeordnetes Serviceeinheiten-Erfassungsmodul. Das Serviceeinheiten-Erfassungsmodul 34 kann Speichermittel umfassen, um beispielsweise Identifikationsdaten von Serviceeinheiten 401,402,403 sowie Beschreibungsdaten von Serviceeinheiten 401,402,403 abzuspeichern. Die Beschreibungsdaten der Serviceeinheiten 401,402,403 können insbesondere den aktuellen Standort einer Serviceeinheit und eine Liste der von der Serviceeinheit mitgeführten Produkte oder Betriebsmittel umfassen. Die Beschreibungsdaten können ferner Angabe über den Bestand von in der Serviceeinheit mitgeführten Produkten oder Betriebsmitteln umfassen.

In den Dienstterminals 201,202,203,204 und in den Serviceeinheiten 401,402,403 können Mittel angebracht sein, um den aktuellen Bestand von im Dienstterminal 201,202,203,204 angeordneten Produkten oder um den aktuellen Bestand von in der Serviceeinheit 401,402,403 mitgeführten Produkten zu bestimmten Zeitpunkten, beispielsweise nach Ablauf eines bestimmten Zeitintervalls, und/oder sofort bei einer Änderung des Bestands im Dienstterminal-Erfassungsmodul 32 oder im Serviceeinheiten-Erfassungsmodul 34 nachzuführen. Eine solche Bestandsänderung kann sich im Dienstterminal 201,202,203,204 durch den Bezug eines Produkts durch einen Benutzer oder durch das Nachfüllen von Produkten in das Dienstterminal 201,202,203,204 ergeben. Eine Bestandsänderung kann sich in einer Serviceeinheit 401,402,403 durch das Entnehmen oder das Hinzufügen von Produkten oder Betriebsmittel ergeben.

Aufgrund der dargestellten Kommunikationsmittel kann der aktuelle Bestand von im Dienstterminal 201,202,203,204 angeordneten Produkten oder Betriebsmittel oder von in der Serviceeinheit 401,402,403 mitgeführten Produkten oder Betriebsmittel zu bestimmten Zeitpunkten oder sofort bei einer Bestandsänderung in den entsprechenden Modulen der Zentrale 3 nachgeführt werden.

In Figur 1 bezieht sich das Bezugszeichen 33 auf ein Bewirtschaftungsmodul. Das Bewirtschaftungsmodul 33 kann eingerichtet sein, um Bewirtschaftungsaufträge zu erstellen und an eine Serviceeinheit 401,402,403 zu übermitteln. Der Bewirtschaftungsauftrag kann beispielsweise Angaben über eine Serviceeinheit 401,402,403, Angaben über ein Dienstterminal 201,202,203,204 und Angaben über Massnahmen umfassen, welche zur Bewirtschaftung eines Dienstterminals durchzuführen sind. Massnahmen zur Bewirtschaftung eines Dienstterminals 201,202,203,204 können im Bewirtschaftungsauftrag beispielsweise durch einen entsprechenden Datensatz dargestellt sein und können Angaben über Produkte oder Betriebsmittel umfassen, welche im Dienstterminal 201,202,203,204 nachzufüllen oder zu ersetzen sind. Aufgrund des Bewirtschaftungsauftrags kann eine entsprechende Serviceeinheit 401,402,403 zu einem entsprechenden Dienstterminal 201,202,203,204 geführt werden, um eine entsprechende Bewirtschaftung durchzuführen.

Bei der Erstellung eines Bewirtschaftungsauftrags können verschiedene Kriterien zur Anwendung kommen. So kann zunächst eine elektronische Liste mit Dienstterminals 201,202,203,204 erstellt werden, bei welchen eine Bewirtschaftung durchzuführen ist. In dieser Liste kann beispielsweise der jeweilige Standort des Dienstterminals 201,202,203,204 sowie beispielsweise ein Zeitpunkt zu welchem die Bewirtschaftung erfolgen soll sowie eine Zahlangabe mit einer aktuellen Menge von im Dienstterminal angeordneten Produkten oder Betriebsmittel abgespeichert sein. Es kann zudem eine elektronische Liste mit Serviceeinheiten 401,402,403 erstellt werden, welche für eine Bewirtschaftung verfügbar sind. In dieser Liste kann beispielsweise der jeweilige Standort der Serviceeinheit 401,402,403, ein Zeitintervall, in welchem die Serviceeinheit 401,402,403 verfügbar bleibt und eine Angabe über die in der Serviceeinheit 401,402,403 mitgeführten Produkte oder Betriebsmittel abgespeichert sein. Aufgrund der Liste mit Angaben über die Dienstterminals und der Liste mit Angaben über die Serviceeinheiten können mittels irgendeines Optimierungsverfahrens Bewirtschaftungsaufträge erstellt werden und an entsprechende Serviceeinheiten 401,402,403 übermittelt werden. Solche Bewirtschaftungsaufträge können zu irgendeinem Zeitpunkt erstellt werden. So können die Listen mit Angaben über die Dienstterminals oder Serviceeinheiten zu bestimmten Zeitpunkten oder bei bestimmten Ereignissen, wie beispielsweise nach dem Bezug eines Produkts an einem Dienstterminal oder der Wartung eines Dienstterminals durch eine Serviceeinheit, nachgeführt werden und mittels des Optimierungsverfahrens überprüft werden, ob die Erstellung von geänderten oder neuen Bewirtschaftungsaufträgen erforderlich oder sinnvoll ist.

Je nach Standort eines Dienstterminals 201,202,203,204 kann es unterschiedlich aufwendig sein, eine Kommunikationsverbindung zwischen dem Dienstterminal 201,202,203,204 und dem Telekommunikationsnetzwerk 6 respektive zwischen dem Dienstterminal und der Zentrale 3 zu erstellen. Beispielsweise kann ein Warenautomat, welcher aufgrund einer Stromversorgung mit einer Solaranlage vollkommen autonom eingerichtet ist, an einem sehr abgelegenen Standort aufgestellt sein, beispielsweise in einer Berghütte. Es kann aufgrund einer mangelnden Abdeckung durch ein Festnetz oder Mobilfunknetz sehr aufwendig sein, diesen Warenautomaten mit dem Telekommunikationsnetzwerk 6 respektive der Zentrale 3 zu verbinden, um Änderungen im Bestand von Produkten des Warenautomaten an die Zentrale 3 zu übermitteln. Aufgrund des abgelegenen Standorts kann es für den Betreiber des Warenautomaten zudem besonders wichtig sein, dass keine unnötigen Schritte für die Bewirtschaftung eines solchen Warenautomaten unternommen werden. Wie in Figur 1 skizziert, kann das Dienstterminal 201 eingerichtet sein, um über eine Nahbereichs-Schnittstelle, also beispielsweise über eine NFC-Schnittstelle oder über eine Bluetooth- Schnittstelle, eine Kommunikationsverbindung mit einem mobilen Endgerät 1 zu erstellen. In Figur 1 bezieht sich das Bezugszeichen 501 auf eine solche Nahbereichs-Kommunikationsverbindung zwischen dem mobilen Endgerät 1 und dem Dienstterminal 201. Die Nahbereichs-Kommunikationsverbindung 501 kann beispielsweise aufgrund eines elektronischen Zahlungsverfahrens zur Bezahlung von im Dienstterminal 201 angeordneten Produkten erstellt werden. Die Nahbereichs-Kommunikationsverbindung 501 kann auch beispielsweise aufgrund einer Detektion, dass sich das mobile Endgerät 1 und das Dienstterminal 201 im gegenseitigen Wirkungsbereich befinden, erstellt werden. In Figur 1 bezieht sich das Bezugszeichen 15 auf ein Modul, beispielsweise ein Softwaremodul, um die erforderlichen Funktionen zur Detektion und Erstellung der Nahbereichs-Kommunikationsverbindung 501 durchzuführen. Ein entsprechendes Modul, beispielsweise ein Softwaremodul, kann wie durch das Bezugszeichen 21 skizziert, im Dienstterminal 201 angeordnet sein. Bei einem Bezug von Produkten am Dienstterminal 201 kann über die Kommunikationsverbindung 501 eine Angabe über die bezogenen Produkte, beispielsweise eine Produktidentifikation und eine Mengenangabe, vom Dienstterminal 201 an das mobile Endgerät 1 übermittelt werden. Über die Nahbereichs-Kommunikationsverbindung 501 kann aber auch eine Angabe über den Bestand aller im Dienstterminal 201 angeordneten Produkte und über den Bestand an Betriebsmittel des Dienstterminals 201 an das mobile Endgerät 1 übermittelt werden. Um die Verlässlichkeit der Angaben zu erhöhen, können im Modul 15 des mobilen Endgeräts 1 und im Modul 21 des Dienstterminals 201 elektronische Schlüssel angeordnet sein, um eine gegenseitige Authentifizierung und/oder eine Verschlüsselung von Daten durchzuführen. Das Modul 15 kann eingerichtet sein, um die Angaben über den Bestand oder die Betriebsmittel des Dienstterminals vollkommen automatisiert zu erfassen. Das Modul 15 kann auch eingerichtet sein, um einem Benutzer des mobilen Endgeräts 1 über ein Display 14 des mobilen Endgeräts die Bereitschaft zur Erfassung von Angaben über den Bestand oder die Betriebsmittel des Dienstterminals anzuzeigen und aufgrund einer entsprechenden Interaktion des Benutzers mit einer Tastatur 13 des mobilen Endgeräts die Erfassung dieser Angaben auszulösen.

Nachdem die Angaben über den Bestand von Produkten und/oder Betriebsmittel des Dienstterminals 201 durch das mobile Endgerät 1 erfasst wurden, können diese Angaben beispielsweise im Modul 15 abgespeichert werden. Das Modul 15 kann eingerichtet sein, die gespeicherten Angaben an das Telekommunikationsnetzwerk 6 respektive an die Zentrale 3 zu übermitteln, sobald sich das mobile Endgerät 1 im Wirkungsbereich eines Mobilfunknetzwerks befindet, welches mit den Mobilfunkmitteln 12 des mobilen Endgeräts 1 zugreifbar ist.

## Patentansprüche

1. System zur Bewirtschaftung von Dienstterminals (201,202,203,204),
**gekennzeichnet durch**:
eine Zentrale (3) mit einem Dienstterminal-Erfassungsmodul (32) zur Erfassung von Daten von Dienstterminals (201,202,203,204) und einem Serviceeinheiten-Erfassungsmodul (34) zur Erfassung von Daten von Serviceeinheiten (401,402,403);
mindestens ein Dienstterminal-Übertragungsmodul (21) zur Übertragung von Daten eines Dienstterminals (201,202,203,204) an das Dienstterminal-Erfassungsmodul (32);
mindestens ein Serviceeinheiten-Übertragungsmodul (41) zur Übertragung von Daten einer Serviceeinheit (401,402,403) an das Serviceeinheiten-Erfassungsmodul (34); und
ein Bewirtschaftungsmodul (33) der Zentrale (3), welches eingerichtet ist, um basierend auf Daten von Dienstterminals (201,202,203,204) und Daten von Serviceeinheiten (401,402,403) einen Bewirtschaftungsauftrag zur Bewirtschaftung eines Dienstterminals (201,202,203,204) zu erstellen und an eine Serviceeinheit (401,402,403) zu übermitteln.

2. System nach Anspruch 1, **gekennzeichnet durch** ein Servicelager-Erfassungsmodul der Zentrale (3) zur Erfassung von Daten von Servicelagern und mindestens ein Servicelager-Übertragungsmodul zur Übertragung von Daten eines Servicelagers, wobei Mittel vorgesehen sind, um den Bewirtschaftungsauftrag zur Bewirtschaftung eines Dienstterminals (201,202,203,204) basierend auf Daten von Servicelagern zu erstellen.

3. System nach einem der Ansprüche 1 bis 2, **gekennzeichnet durch** ein Kommunikationsnetz (6), welches eingerichtet ist um Daten zwischen Dienstterminals (201,202,203,204), Serviceeinheiten (401,402,403) und/oder der Zentrale (3) respektive Servicelagern zu übertragen.

4. System nach einem der Ansprüche 1 bis 3, **gekennzeichnet durch** ein mobiles Kommunikationsgerät (1), welches eingerichtet ist, um mittels einer Nahbereichs-Schnittstelle (11) Daten eines Dienstterminals (201,202,203,204) zu erfassen und mittels einer Mobilfunk-Schnittstelle (12) die erfassten Daten an das Dienstterminal-Erfassungsmodul der Zentrale (3) zu übermitteln.

5. System nach Anspruch 4, **gekennzeichnet durch** Bezugsmittel (23) für den Bezug von Produkten (24), welche mittels des Dienstterminals (201,202,203,204) angeboten sind, und zur Abbuchung eines entsprechenden Geldbetrags von einem Konto, wobei die Bezugsmittel (23) eingerichtet sind, um die Abbuchung zusammen mit einer Übertragung von Daten des Dienstterminals (201,202,203,204) an das Dienstterminal-Erfassungsmodul (32) der Zentrale (3) durchzuführen.

6. System nach einem der Ansprüche 1 bis 5, **gekennzeichnet durch** mindestens in der Zentrale (3) angebrachte Speichermittel, welche eingerichtet sind, um Bezugsdaten betreffend einem verfügbaren Bestand und/oder einer Bezugsfrequenz von Produkten, welche mittels dem Dienstterminal (201,202,203,204) angeboten sind, abzuspeichern, wobei Mittel vorgesehen sind, um den Bewirtschaftungsauftrag basierend auf den Bezugsdaten zu erstellen.

7. System nach einem der Ansprüche 1 bis 6, **gekennzeichnet durch** mindestens in der Zentrale (3) angebrachten Speichermittel, welche eingerichtet sind, um Verfügbarkeitsdaten betreffend einem Bestand von Produkten, welche in der Serviceeinheit (401,402,403) mitgeführt sind, abzuspeichern, wobei Mittel vorgesehen sind, um den Bewirtschaftungsauftrag basierend auf den Verfügbarkeitsdaten zu erstellen.

8. System nach einem der Ansprüche 1 bis 7, **gekennzeichnet durch** mindestens in der Zentrale (3) angebrachte Speichermittel, welche eingerichtet sind, um Standortdaten betreffend dem Standort eines Dienstterminals (201,202,203,204) und/oder dem Standort einer Serviceeinheit (401,402,403) respektive dem Standort eines Servicelagers abzuspeichern, wobei Mittel vorgesehen sind, um den Bewirtschaftungsauftrag basierend auf den abgespeicherten Standortdaten zu erstellen.

9. Verfahren zur Bewirtschaftung von Dienstterminals (201,202,203,204),
**dadurch gekennzeichnet,**
**dass** mittels eines Dienstterminal-Erfassungsmoduls (32) einer Zentrale (3) Daten von Dienstterminals (201,202,203,204) erfasst werden und mittels eines Serviceeinheiten-Erfassungsmoduls (34) Daten von Serviceeinheiten (401,402,403) erfasst werden, wobei Daten eines Dienstterminals (201,202,203,204) mittels mindestens eines Dienstterminal-Übertragungsmoduls (21) an das Dienstterminal-Erfassungsmodul (32) übertragen werden, wobei Daten einer Serviceeinheit (401,402,403) mittels
mindestens eines Serviceeinheiten-Übertragungsmoduls (41) an das Serviceeinheiten-Erfassungsmodul (34) übertragen werden, und
**dass** mittels eines Bewirtschaftungsmoduls (33) der Zentrale (3) basierend auf Daten von Dienstterminals (201,202,203,204) und auf Daten von Serviceeinheiten (401,402,403) ein Bewirtschaftungsauftrag zur Bewirtschaftung eines Dienstterminals (201,202,203,204) erstellt wird und an eine Serviceeinheit (401,402,403) übermittelt wird.

10. Verfahren nach Anspruch 9, **dadurch gekennzeichnet, dass** mittels eines Servicelager-Erfassungsmoduls der Zentrale (3) Daten von Servicelagern erfasst werden und mittels mindestens eines Servicelager-Übertragungsmoduls Daten eines Servicelagers an das Servicelager-Erfassungsmodul übertragen werden, wobei der Bewirtschaftungsauftrag zur Bewirtschaftung eines Dienstterminals (201,202,203,204) basierend auf Daten von Servicelagern erstellt wird.

11. Verfahren nach einem der Ansprüche 9 bis 10, **dadurch gekennzeichnet, dass** Daten zwischen Dienstterminals (201,202,203,204), Serviceeinheiten (401,402,403) und/oder der Zentrale (3) respektive Servicelagern über ein Kommunikationsnetz (6) übertragen werden.

12. Verfahren nach einem der Ansprüche 9 bis 11, **dadurch gekennzeichnet, dass** Daten eines Dienstterminals (201,202,203,204) mittels einer Nahbereichs-Schnittstelle (11) eines mobilen Kommunikationsgeräts(1) erfasst werden und mittels einer Mobilfunk-Schnittstelle (12) des mobilen Kommunikationsgeräts (1) die erfassten Daten an das Dienstterminal-Erfassungsmodul der Zentrale (3) übermittelt werden.

13. Verfahren nach Anspruch 12, **dadurch gekennzeichnet, dass** Produkte (24), welche mittels des Dienstterminals (201,202,203,204) angeboten werden, mittels Bezugsmittel (23) bezogen werden und ein entsprechender Geldbetrag von einem Konto abgebucht wird, wobei die Abbuchung zusammen mit einer Übertragung von Daten des Dienstterminals (201,202,203,204) an das Dienstterminal-Erfassungsmodul (32) der Zentrale (3) durchgeführt wird.

14. Verfahren nach einem der Ansprüche 9 bis 13, **dadurch gekennzeichnet, dass** Bezugsdaten betreffend einem verfügbaren Bestand und/oder einer Bezugsfrequenz von Produkten, welche mittels dem Dienstterminal (201,202,203,204) angeboten werden, in mindestens in der Zentrale (3) angebrachten Speichermittel abgespeichert werden, wobei der Bewirtschaftungsauftrag basierend auf den Bezugsdaten erstellt wird.

15. Verfahren nach einem der Ansprüche 9 bis 14, **dadurch gekennzeichnet, dass** Verfügbarkeitsdaten betreffend einem Bestand von Produkten, welche in der Serviceeinheit (401,402,403) mitgeführt werden, in mindestens in der Zentrale (3) angebrachten Speichermittel abgespeichert werden, wobei der Bewirtschaftungsauftrag basierend auf den Verfügbarkeitsdaten erstellt wird.

16. Verfahren nach einem der Ansprüche 9 bis 15, **dadurch gekennzeichnet, dass** Standortdaten betreffend dem Standort eines Dienstterminals (201,202,203,204) und/oder dem Standort einer Serviceeinheit (401,402,403) respektive dem Standort eines Servicelagers in mindestens in der Zentrale (3) angebrachten Speichermittel abgespeichert werden, wobei der Bewirtschaftungsauftrag basierend auf den abgespeicherten Standortdaten erstellt wird.

17. Mobiles Endgerät (1) zur Verwendung in einem System gemäss einem der Ansprüche 1 bis 8 oder zur Durchführung eines Verfahrens gemäss einem der Ansprüche 9 bis 16**, dadurch gekennzeichnet, dass** im mobilen Endgerät (1) Mittel vorgesehen sind, um Daten von Dienstterminals (201,202,203,204) zu erfassen und dass im mobilen Endgerät Mittel vorgesehen sind, um die erfassten Daten an ein Dienstterminal-Erfassungsmodul (32) einer Zentrale (3) zu übermitteln.

18. Dienstterminal (201,202,203,204) zur Verwendung in einem System gemäss einem der Ansprüche 1 bis 8 oder zur Durchführung eines Verfahrens gemäss einem der Ansprüche 9 bis 16, **dadurch gekennzeichnet, dass** im Dienstterminal (201,202,203,204) Mittel vorgesehen sind, um Daten des Dienstterminals (201,202,203,204) an ein Dienstterminal-Erfassungsmodul (32) einer Zentrale zu übermitteln.

19. Computerprogrammprodukt zum Betreiben einer Zentrale (3), welche in einem System gemäss einem der Ansprüche 1 bis 8 verwendet ist oder welche zur Durchführung eines Verfahrens gemäss einem der Ansprüche 9 bis 16 verwendet wird, **dadurch gekennzeichnet, dass** die Zentrale (3) durch das Computerprogrammprodukt derart betreiben wird, dass mittels eines Dienstterminal-Erfassungsmoduls (32) Daten von Dienstterminals (201,202,203,204) und mittels eines Serviceeinheiten-Erfassungsmoduls (34) Daten von Serviceeinheiten (401,402,403) erfasst werden, und
dass mittels eines Bewirtschaftungsmoduls (33) basierend auf Daten von Dienstterminals (201,202,203,204) und Daten von Serviceeinheiten (401,402,403) ein Bewirtschaftungsauftrag zur Bewirtschaftung eines Dienstterminals (201,202,203,204) erstellt und an eine Serviceeinheit (401,402,403) übermittelt wird.
